# EUROPEAN PATENT APPLICATION

(11) **EP 4 394 346 A1**
(43) Date of publication of application: **03.07.2024**
(21) Application number: 23818840.3
(22) Date of filing: 25.04.2023
(51) Int. Cl.: G01M 3/04, H01M 10/42, H01M 10/48

(54) **LIQUID LEAKAGE DETECTION METHOD AND APPARATUS, BATTERY CONTROL UNIT, AND BATTERY MANAGEMENT SYSTEM**

(30) Priority: 10.06.2022 CN 202210653480
(71) Applicant: Contemporary Amperex Technology Co., Limited, Ningde, Fujian 352100 (CN)
(72) Inventor: SUN, Long, Ningde, Fujian 352100 (CN); XIE, Lan, Ningde, Fujian 352100 (CN); WANG, Chenping, Ningde, Fujian 352100 (CN); WU, Xiaohui, Ningde, Fujian 352100 (CN); LIN, Zhen, Ningde, Fujian 352100 (CN)
(74) Representative: Behr, Wolfgang
(86) International application number: PCT/CN2023/090551
(87) International publication number: WO 2023/236673

(57) **Abstract**

This application relates to a liquid leak detection method and apparatus, a battery control unit, and a battery management system. The method includes: obtaining a gas concentration detection signal output separately by a plurality of target gas sensors in a battery box, where the gas concentration detection signal is used for indicating a measured gas concentration; obtaining position information of each target gas sensor in the battery box; and determining a leaking region in the battery box based on the gas concentration detection signal and the position information of each target gas sensor. To sum up, in an embodiment of this application, the leaking region in the battery box can be located by analyzing the gas concentration detection signals and position information of a plurality of target gas sensors in the battery box, so that prompt information used for indicating the leaking region can be output subsequently. In this way, maintenance personnel or a user of a vehicle containing the battery box can quickly and accurately locate the leaking region and take corresponding measures, thereby improving maintenance efficiency.

## Description

### CROSS-REFERENCE TO RELATED APPLICATIONS

This application claims priority to Chinese Patent Application No. 2022106534806, filed on June 10, 2022 and entitled "LIQUID LEAK DETECTION METHOD AND APPARATUS, BATTERY CONTROL UNIT, AND BATTERY MANAGEMENT SYSTEM", which is incorporated herein by reference in its entirety.

### TECHNICAL FIELD

This application relates to the technical field of batteries, and in particular, to an liquid leak detection method and apparatus, a battery control unit, and a battery management system.

### BACKGROUND

In practical applications, leakage of a water-based coolant or electrolyte solution in a battery box may cause a short circuit between two adjacent battery cells in the battery box, result in failure of insulation between the adjacent battery cells, and in turn, affect the normal operation of the battery box, and even give rise to safety hazards such as fire and explosion in severe cases. Therefore, it is very important to detect the leakage of the water-based coolant or electrolyte solution in the battery box.

In some circumstances, a moisture sensor, a control module, and an alarm module are disposed in a lithium battery box. The moisture sensor detects liquid leak by sensing the air humidity in the lithium battery box, and reports the leak to the control module upon detecting the leak, so that the control module controls the alarm module to send an alarm.

However, in such circumstances, only the leak of liquid is detected, but the leaking region is not determined.

### SUMMARY

In view of the problems above, this application provides a liquid leak detection method and apparatus, a battery control unit, and a battery management system to solve the problem of inability to determine a leaking region mentioned in the background above.

According to a first aspect, this application provides a liquid leak detection method. The method includes:
obtaining a gas concentration detection signal output separately by a plurality of target gas sensors in a battery box, where the gas concentration detection signal is used for indicating a measured gas concentration;
obtaining position information of each target gas sensor in the battery box; and
determining a leaking region in the battery box based on the gas concentration detection signal and the position information.

In the technical solution of an embodiment of this application, the leaking region in the battery box can be located by analyzing the gas concentration detection signals and position information of a plurality of target gas sensors in the battery box, so that prompt information used for indicating the leaking region can be output subsequently. In this way, maintenance personnel or a user of a vehicle containing the battery box can quickly and accurately locate the leaking region and take corresponding measures, thereby improving maintenance efficiency.

In some embodiments, the target gas sensor is a sensor that, among a plurality of candidate gas sensors disposed in the battery box, detects a gas concentration greater than a preset concentration threshold. The determining a leaking region in the battery box based on the gas concentration detection signal and the position information includes:
determining a plurality of first near gas sensors for each target gas sensor among the plurality of candidate gas sensors based on the position information of the target gas sensor, where the first near gas sensors are at a distance from the target gas sensor, and the distance is less than a preset distance threshold; and
determining the leaking region based on a first gas concentration measured by each first near gas sensor.

In the technical solution of this embodiment of this application, for each target gas sensor, the leaking region is determined with reference to the first gas concentrations measured by all the first near gas sensors separately, thereby reducing the probability of misjudgment, and improving accuracy of detecting the leaking region.

In some embodiments, the determining the leaking region based on a first gas concentration measured by each first near gas sensor includes: determining the leaking region based on each first gas concentration, a first sensed region corresponding to the target gas sensor, and a second sensed region corresponding to each first near gas sensor.

In some embodiments, the determining the leaking region based on each first gas concentration, a first sensed region corresponding to the target gas sensor, and a second sensed region corresponding to each first near gas sensor includes:
using, in a case that none of the first gas concentrations is greater than the preset concentration threshold, a region in the first sensed region except all the second sensed regions as the leaking region;
determining, in a case that the first gas concentrations detected by a part of the first near gas sensors are greater than the preset concentration threshold and the first gas concentrations detected by another part of the first near gas sensors are not greater than the preset concentration threshold, a first intersection region of the first sensed region and the second sensed regions corresponding to the part of the first near gas sensors, and using a region in the first intersection region except the second sensed regions corresponding to the other part of the first near gas sensors as the leaking region; and
using, in a case that all the first gas concentrations are greater than the preset concentration threshold, a second intersection region of the first sensed region and all the second sensed regions as the leaking region.

In some embodiments, the target gas sensor is a sensor that, among a plurality of candidate gas sensors disposed in the battery box, detects a gas concentration greater than a preset concentration threshold. The determining a leaking region in the battery box based on the gas concentration detection signal and the position information includes:
detecting, for each target gas sensor, based on the position information of the target gas sensor, whether a second near gas sensor exists in the plurality of target sensors, where the second near gas sensor is at a distance from the target gas sensor, and the distance is less than a preset distance threshold; and
determining the leaking region based on a detection result.

In the technical solution of this embodiment of this application, for each target gas sensor, the detecting whether a second near gas sensor exists in the plurality of target sensors can reduce the probability of misjudgment and improve accuracy of detecting the leaking region.

In some embodiments, the determining the leaking region based on a detection result includes:
using, in a case that the second near gas sensor exists, a third intersection region of the first sensed region corresponding to the target gas sensor and a third sensed region corresponding to the second near gas sensor as the leaking region; and
using, in a case that the second near gas sensor does not exist, a region in the first sensed region except sensed regions corresponding to all the first near gas sensors of the target gas sensor as the leaking region, where the first near gas sensors are gas sensors at a distance from the target gas sensor among the plurality of candidate gas sensors, and the distance is less than the preset distance threshold.

In some embodiments, the method further includes: determining, for each leaking region, a leak degree corresponding to the leaking region based on a gas concentration measured by at least one target gas sensor corresponding to the leaking region, where a sensed region of the target gas sensor includes a part or all of the leaking region. In this way, a corresponding countermeasure can be selected depending on the leak degree, thereby maximally avoiding safety problems caused by the liquid leakage.

In some embodiments, the determining a leak degree corresponding to the leaking region based on a gas concentration measured by at least one target gas sensor corresponding to the leaking region includes:
determining a reference gas concentration based on the gas concentration measured by the at least one target gas sensor; and
determining the leak degree based on a value of the reference gas concentration.

In some embodiments, the determining a reference gas concentration based on the gas concentration measured by the at least one target gas sensor includes: determining, when a number of the target sensors is plural, that a maximum value of gas concentrations measured by the plurality of target gas sensors is the reference gas concentration, or that an average value of gas concentrations measured by the plurality of target gas sensors is the reference gas concentration.

In some embodiments, the method further includes: determining, based on a preset correspondence between a leak degree and a countermeasure, a countermeasure corresponding to the leak degree. In this way, the safety problems caused by the liquid leakage are maximally avoided, thereby improving safety of the battery box and the vehicle.

In some embodiments, the countermeasure includes at least one of:
outputting prompt information to a vehicle containing the battery box, where the prompt information is used for prompting a user of the vehicle that a liquid leak occurs in the battery box;
controlling a battery cell located in the leaking region to stop operating;
reducing an operating power of the battery cell located in the leaking region;
controlling a water cooling apparatus located in the leaking region to stop operating;
reducing an operating power of the water cooling apparatus located in the leaking region; or
outputting alarm information to a target terminal, where the alarm information is used for indicating information about the vehicle and information about the battery box.

In some embodiments, the gas concentration detection signal output by each target gas sensor is further used for indicating the position information of the target gas sensor, and the obtaining position information of each target gas sensor in the battery box includes: determining, for each target gas sensor, the position information of the target gas sensor in the battery box based on the gas concentration detection signal output by the target gas sensor.

According to a second aspect, this application provides a liquid leak detection apparatus. The apparatus includes:
a first obtaining module, configured to obtain a gas concentration detection signal output separately by a plurality of target gas sensors in a battery box, where the gas concentration detection signal is used for indicating a measured gas concentration;
a second obtaining module, configured to obtain position information of each target gas sensor in the battery box; and
a determining module, configured to determine a leaking region in the battery box based on the gas concentration detection signal and the position information.

According to a third aspect, this application provides a battery control unit, including a memory and a processor. The memory stores a computer program. When executing the computer program, the processor implements steps of the liquid leak detection method described in the preceding embodiment.

According to a fourth aspect, this application provides a battery management system. The system includes: the battery control unit according to the third aspect above, and a plurality of candidate gas sensors distributed in the battery box.

According to a fifth aspect, this application provides an electrical device. The electrical device includes the battery management system according to the fourth aspect.

According to a sixth aspect, this application provides a computer-readable storage medium. The computer-readable storage medium stores a computer program. When executed by a processor, the computer program implements steps of the liquid leak detection method disclosed in the preceding embodiment.

According to a seventh aspect, this application provides a computer program product. The computer program product includes a computer program. When executed by a processor, the computer program implements steps of the liquid leak detection method disclosed in the preceding embodiment.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:
FIG. 1 is a schematic diagram of an application environment provided in an embodiment of this application;
FIG. 2 is a schematic flowchart of a liquid leak detection method according to some embodiments of this application;
FIG. 3 is a first schematic diagram of a position of a gas sensor according to an embodiment of this application;
FIG. 4 is a first schematic diagram of locating a leaking region by use of a gas sensor according to an embodiment of this application;
FIG. 5 is a schematic flowchart of a liquid leak detection method according to some other embodiments of this application;
FIG. 6 is a second schematic diagram of a position of a gas sensor according to an embodiment of this application;
FIG. 7 is a second schematic diagram of locating a leaking region by use of a gas sensor according to an embodiment of this application;
FIG. 8 is a schematic flowchart of a liquid leak detection method according to some other embodiments of this application;
FIG. 9 is a schematic flowchart of a liquid leak detection method according to some other embodiments of this application;
FIG. 10 is a schematic diagram of how a concentration range covering a reference gas concentration is related to a leak degree according to an embodiment of this application;
FIG. 11 is a schematic diagram of determining a countermeasure based on a leak degree according to an embodiment of this application; and
FIG. 12 is a schematic structural diagram of a liquid leak detection apparatus according to some embodiments of this application.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The term "include" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more (including two).

Typically, a battery cell in a battery box includes an electrolyte solution as a carrier for ion transport in the battery cell. To ensure that the battery cell in the battery box works within an appropriate temperature range, a water cooling pipeline is disposed in the battery box. A water-based coolant flows in the water cooling pipeline.

In practical applications, the water-based coolant in the water cooling pipeline is at risk of leaking due to corrosion of the water cooling pipeline or a loose joint of the pipeline or for other reasons. Due to corrosion and other reasons, leakage is also prone to occur at an explosion-proof valve or weld of the battery cell. Leakage of a water-based coolant or electrolyte solution in a battery box may cause a short circuit between two adjacent battery cells in the battery box, result in failure of insulation between the adjacent battery cells, and in turn, affect the normal operation of the battery box, and even give rise to safety hazards such as fire and explosion in severe cases. Therefore, it is very important to detect the leakage of the water-based coolant or electrolyte solution in the battery box.

In some circumstances, a moisture sensor, a control module, and an alarm module are disposed in a lithium battery box. The moisture sensor detects liquid leak by sensing the air humidity in the lithium battery box, and reports the leak to the control module upon detecting the leak, so that the control module controls the alarm module to send an alarm. However, in such circumstances, only the leak of liquid is detected, but the leaking region is not determined.

To determine the leaking region, the applicant finds through research that the main constituents of the water-based coolant are water and volatile ethylene glycol. The main constituents of the electrolyte solution are various volatile organic solvents. In this application, a plurality of gas sensors may be dispersedly disposed in the battery box. The leaking region in the battery box can be determined based on the gas concentration as a result of volatilizing the water-based coolant and/or the gas concentration as a result of volatilizing the electrolyte solution detected by a plurality of gas sensors separately, with reference to the positional relationship between the plurality of gas sensors.

In this embodiment of this application, the gas sensor in the battery box provides a battery control unit with a fourth detection signal in addition to a voltage signal, a current signal, and a temperature signal. In this way, the battery control unit can detect the leak conveniently based on the gas concentration detection signal sent by the gas sensor, so as to provide a time margin for implementing a countermeasure, and in turn, avoid severe safety accidents such as a short circuit or fire. In addition, due to the volatilization and diffusivity of gas, a small number of gas sensors may be combined into a sensor array in one battery box to monitor the leakage of the water-based coolant or electrolyte solution in the entire space of the battery box in real time.

In this case, because the gas sensor is tiny in size and as small as a coin, the gas sensor can be mounted in a gap in the battery box without changing the overall structure of the battery box or re-designing the structure complexly. Therefore, for old battery boxes, this technology can also be easily introduced.

In view of the considerations above, to solve the problem of inability to determine a leaking region as mentioned in the background technology, the applicant hereof discloses a liquid leak detection method through research. In this method, the leaking region in the battery box can be located by analyzing the gas concentration detection signals and position information of a plurality of target gas sensors in the battery box, so that prompt information used for indicating the leaking region can be output subsequently. In this way, maintenance personnel or a user of a vehicle containing the battery box can quickly and accurately locate the leaking region and take corresponding measures, thereby improving maintenance efficiency.

It is hereby noted that, for leakage of liquids other than the water-based coolant and electrolyte solution, the liquid leak detection method provided in an embodiment of this application is also applicable. The applicability is not limited herein.

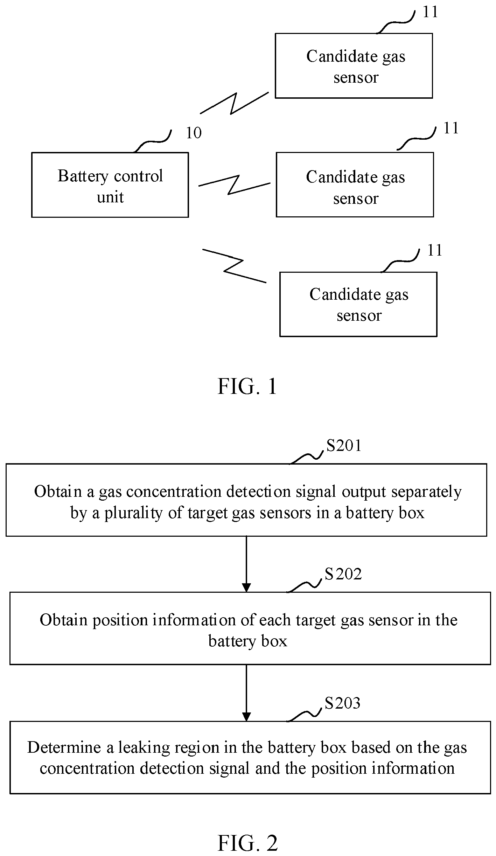

FIG. 1 is a schematic diagram of an application environment provided in an embodiment of this application. As shown in FIG. 1, the application environment of this embodiment of this application may include: a battery control unit 10 and a plurality of candidate gas sensors 11. The plurality of candidate gas sensors 11 may be distributed in the battery box. In an embodiment, each candidate gas sensor 11 is configured to detect a gas concentration in the battery box, and send a gas concentration detection signal indicating the measured gas concentration to the battery control unit 10. The battery control unit 10 is configured to determine a leaking region in the battery box based on the gas concentration detection signal sent by each candidate gas sensor by using the liquid leak detection method according to this embodiment of this application.

As an example, in this embodiment of this application, communication between each candidate gas sensor 11 and the battery control unit 10 may be performed in a wired or wireless manner.

As an example, a plurality of candidate gas sensors in this embodiment of this application may include, but are not limited to, any one of: an electrochemical gas sensor, an infrared optical gas sensor, a semiconductor gas sensor, or a photoionization gas sensor.

Different types of gas sensors mentioned above are briefly described in the following embodiments of this application.

Electrochemical gas sensor: This sensor can detect a gas at a specific concentration of 1 part per million (ppm), identify a trace amount of leak, and achieve a high detection accuracy. By selecting an appropriate breathable film and catalyst, the sensor can achieve a high level of selectivity in response to desired gases without being interfered with by the gases caused by volatilization of aged structural components in the battery box or for other reasons. Within 5 seconds after a target gas such as water-based coolant or electrolyte solution is leaked in the sensed region of the electrochemical sensor, the electrochemical sensor can generate a significant response signal.

Infrared optical gas sensor: This sensor can detect a gas at a specific concentration of 1 ppm, identify a trace amount of leak, and achieve a high detection accuracy. By selecting an appropriate gas infrared spectrogram and infrared band, the sensor can achieve a high level of selectivity in response to desired gases without being interfered with by the gases caused by volatilization of aged structural components in the battery box or for other reasons.

Semiconductor gas sensor: This sensor can detect a gas at a concentration of 5 ppm, identify a trace amount of leak, and achieve a high detection accuracy. By selecting an internal gas-sensitive material and a catalyst, the sensor can achieve a higher level of selectivity of the target gases with less interference from non-target gases. This sensor is characterized by longevity, with a lifespan of more than 10 years, and a low price.

Photoionization gas sensor: This sensor can detect a gas at a specific concentration of a part per billion (ppb), identify a trace amount of leak, achieve an extremely high detection accuracy, respond quickly, and monitor the gas in real time.

The battery control unit according to this embodiment of this application is applicable to, but is not limited to use in, electrical devices such as a vehicle, watercraft, or aircraft. A power supply system of the electrical device may contain the battery control unit disclosed herein and the like to determine a leaking region in the battery box.

The electrical device according to this embodiment of this application may be, but is not limited to, an electric toy, an electric tool, an electric power cart, an electric vehicle, a ship, a spacecraft, or the like. The electric toy may include stationary or mobile electric toys, such as an electric car toy, an electric ship toy, an electric airplane toy, and the like. The spacecraft may include an airplane, a rocket, a space shuttle, a spaceship, and the like.

For ease of description in the following embodiments, a vehicle is used as an example of the electrical device according to an embodiment of this application. Understandably, when the electrical device in this embodiment of this application is another device, the implementation principles and technical effects are similar.

In some embodiments, FIG. 2 is a schematic flowchart of a liquid leak detection method according to some embodiments of this application. This embodiment of this application is described by using an example in which the method is applied to the battery control unit in FIG. 1. As shown in FIG. 2, the method according to this embodiment of this application includes the following steps:
Step S201: Obtaining a gas concentration detection signal output separately by a plurality of target gas sensors in a battery box.

In this embodiment of this application, the target gas sensor may be a sensor that, among a plurality of candidate gas sensors disposed in the battery box, detects a gas concentration greater than a preset concentration threshold. Understandably, if the gas concentration measured by any candidate gas sensor is greater than the preset concentration threshold, it indicates that a liquid leak occurs in the sensed region of the candidate gas sensor.

As an example, a plurality of candidate gas sensors in this embodiment of this application may be distributed in an array at positions such as easily corrodible parts in the water cooling pipeline, pipeline joints, explosion-proof valves of the battery cell, and welds in the battery box, so that the sensors can detect leakage of the water-based coolant or electrolyte solution in time. Understandably, the distance between every two adjacent candidate gas sensors is less than a sensing radius of each candidate gas sensor, so as to detect leakage of the water-based coolant or electrolyte solution in different regions in the battery box.

It is hereby noted that the candidate gas sensor in this embodiment of this application can detect a trace amount of leakage of the water-based coolant or electrolyte solution in the sensed region. The sensed region may include a circular region corresponding to the sensing radius.

As an example, mentioned in this embodiment of this application, the gas concentration measured by the candidate gas sensor or target gas sensor may include, but is not limited to: the concentration of the gas generated by volatilizing the water-based coolant and/or the concentration of the gas generated by volatilizing the electrolyte solution.

In a possible implementation, when the measured gas concentration is greater than a preset concentration threshold, the candidate gas sensor in this embodiment of this application may let the measured gas concentration be carried in a gas concentration detection signal and send the signal to the battery control unit. The gas concentration detection signal is used for indicating the gas concentration measured by the candidate gas sensor. Understandably, when the gas concentration measured by the candidate gas sensor is not greater than the preset concentration threshold, the sensor will not send the gas concentration detection signal to the battery control unit.

For this implementation, the battery control unit may receive the gas concentration detection signals sent by a plurality of candidate gas sensors respectively in the battery box when the measured gas concentration is greater than the preset concentration threshold. The candidate gas sensors may be referred to as target gas sensors.

In another possible implementation, each candidate gas sensor in this embodiment of this application may let each measured gas concentration be carried in a gas concentration detection signal and send the signal to the battery control unit. The gas concentration detection signal is used for indicating the gas concentration measured by the candidate gas sensor. The gas concentration may be not greater than the preset concentration threshold, or may be greater than the preset concentration threshold.

For this implementation, the battery control unit may receive the gas concentration detection signals sent by a plurality of candidate gas sensors respectively in the battery box, and then compare the gas concentrations indicated by the gas concentration detection signals of the plurality of candidate gas sensors respectively with the preset concentration threshold, and determine that a sensor that detects a gas concentration greater than the preset concentration threshold among the plurality of candidate gas sensors is a target gas sensor.

Step S202: Obtaining position information of each target gas sensor in the battery box.

In this step, the battery control unit may obtain the position information of each target gas sensor in the battery box separately based on the gas concentration detection signal output by each target gas sensor and obtained in step S201 above. As an example, the position information of the target gas sensor in the battery box in this embodiment of this application may include, but is not limited to at least one of: coordinate information of the target gas sensor in the battery box, identification information of a target cell in the battery box, or coordinate information of the target cell in the battery box. The target cell means a battery cell located at a distance from the target gas sensor in the battery box, and the distance is less than a preset distance.

In an embodiment, if the gas concentration detection signal output by each target gas sensor is further used for indicating the position information of the target gas sensor, then, for each target gas sensor, the battery control unit may determine the position information of the target gas sensor in the battery box based on the gas concentration detection signal output by the target gas sensor.

As an example, if the gas concentration detection signal output by the target gas sensor further includes the identification information of the target gas sensor, then the battery control unit may determine the position information of the target gas sensor in the battery box based on the identification information of the target gas sensor and a preset correspondence between the identifier of the gas sensor and the position. The preset correspondence between the identifier of the gas sensor and the position includes a correspondence between the identification information of the target gas sensor and the position information of the target gas sensor in the battery box.

As another example, if the gas concentration detection signal output by the target gas sensor further includes the position identification information of the target gas sensor, then the battery control unit may determine the position information of the target gas sensor in the battery box based on the position identification information of the target gas sensor and a preset correspondence between a position identifier of the gas sensor and the position information. The preset correspondence between the position identifier of the gas sensor and the position information includes a correspondence between the position identification information of the target gas sensor and the position information of the target gas sensor in the battery box.

Alternatively, the battery control unit may obtain the position information of each target gas sensor in the battery box in other manners. The obtaining manner is not limited herein.

Step S203: Determining a leaking region in the battery box based on the gas concentration detection signal and the position information.

In this step, the battery control unit may locate the leaking region in the battery box based on the gas concentration detection signal of each target gas sensor, which is obtained in step S201, and based on the position information of each target gas sensor in the battery box, which is obtained in step S202, so that prompt information used for indicating the leaking region can be output subsequently. In this way, maintenance personnel or a user of a vehicle containing the battery box can quickly and accurately locate the leaking region and take corresponding measures.

As an example, the battery control unit may determine near gas sensors for each target gas sensor based on the position information of the target gas sensor, where the near gas sensors are at a distance from the target gas sensor, and the distance is less than a preset distance threshold. Subsequently, the battery control unit can analyze and determine the leaking region in the battery box with reference to the gas concentration detection signals of the near gas sensors.

Understandably, the near gas sensors that are at a distance less than the preset distance threshold from the target gas sensor (for example, the first near gas sensor or the second near gas sensor), which are mentioned in this embodiment of this application, may include a part or all of the gas sensors adjacent to the target gas sensor in the battery box.

For ease of understanding, this embodiment of this application is described by using an example in which two candidate gas sensors are disposed in the battery box.

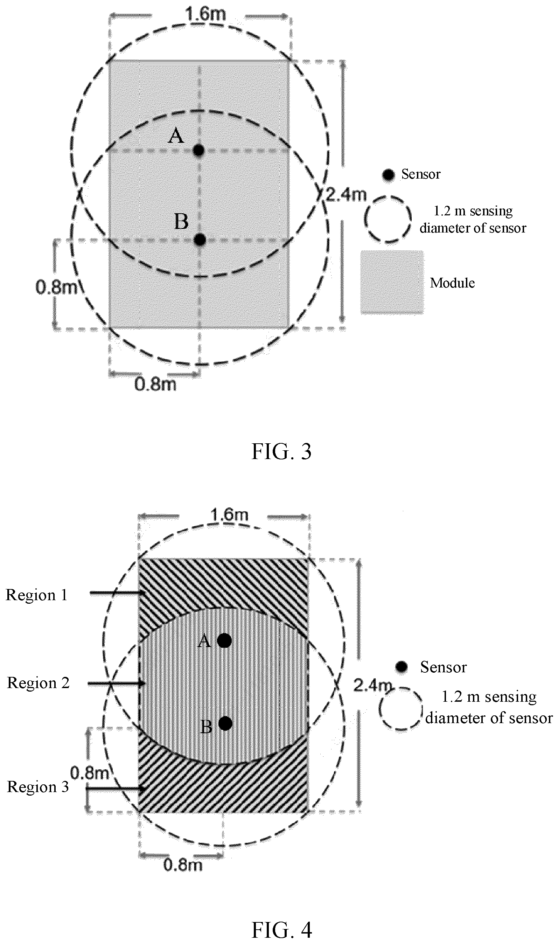

For example, FIG. 3 is a first schematic diagram of a position of a gas sensor according to an embodiment of this application, and FIG. 4 is a first schematic diagram of locating a leaking region by use of a gas sensor according to an embodiment of this application. Referring to FIG. 3 and FIG. 4, it is assumed that the battery box is 2.4 m long and 1.6 m wide, and contains 6 modules. Each module includes at least one battery cell. The sensing radius of the gas sensor A and the gas sensor B is 1.2 m. In other words, the gas sensor A and the gas sensor B can cover the entire battery box region. If the gas sensor A is a target gas sensor, the gas sensor B is a near gas sensor of the target gas sensor, and the gas concentration detection signal of the gas sensor B is used for indicating that a liquid leak occurs in the battery box, then the battery control unit may determine that an intersection region 2 (inside the battery box) of the sensed region of the gas sensor A and the sensed region of the gas sensor B is a leaking region. If the gas concentration detection signal of the gas sensor B is used for indicating that no liquid leak occurs in the battery box, then the battery control unit may determine that a region 1 (inside the battery box) in the sensed region of the gas sensor A except the sensed region of the gas sensor B is a leaking region.

In the liquid leak detection method, the battery control unit obtains a gas concentration detection signal output separately by a plurality of target gas sensors in the battery box, where the gas concentration detection signal is used for indicating a measured gas concentration; obtains position information of each target gas sensor in the battery box; and determines a leaking region in the battery box based on the gas concentration detection signal and the position information of each target gas sensor. To sum up, in an embodiment of this application, the leaking region in the battery box can be located by analyzing the gas concentration detection signals and position information of a plurality of target gas sensors in the battery box, so that prompt information used for indicating the leaking region can be output subsequently. In this way, maintenance personnel or a user of a vehicle containing the battery box can quickly and accurately locate the leaking region and take corresponding measures, thereby improving maintenance efficiency.

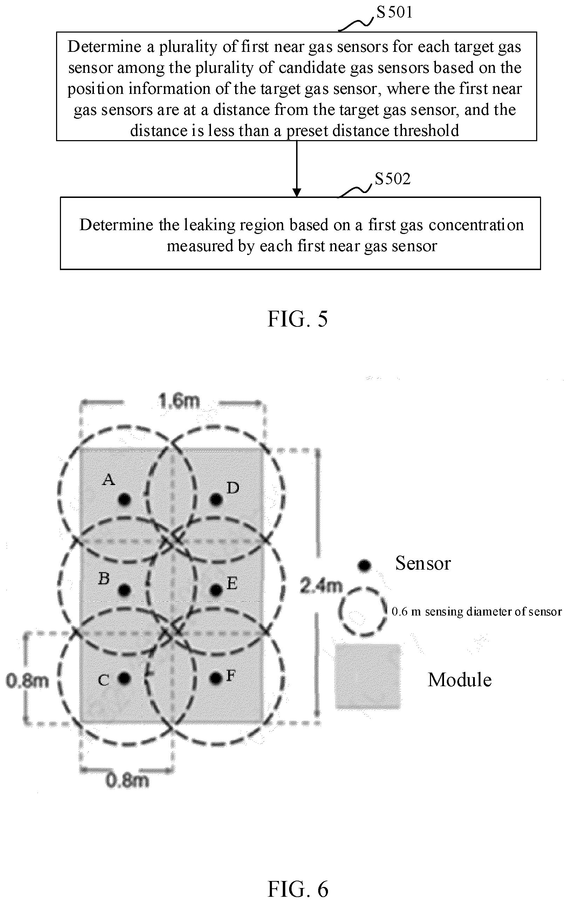

In some embodiments, FIG. 5 is a schematic flowchart of a liquid leak detection method according to some other embodiments of this application. On the basis of the preceding embodiment, the related content of step S203 "determining a leaking region in the battery box based on the gas concentration detection signal and the position information" in an embodiment of this application is described below. As shown in FIG. 5, the method according to an embodiment of this application includes the following steps:

Step S501: Determining a plurality of first near gas sensors for each target gas sensor among the plurality of candidate gas sensors based on the position information of the target gas sensor, where the first near gas sensors are at a distance from the target gas sensor, and the distance is less than a preset distance threshold.

Each candidate gas sensor in this embodiment of this application may let each measured gas concentration be carried in a gas concentration detection signal and send the signal to the battery control unit. The gas concentration detection signal is used for indicating the gas concentration measured by the candidate gas sensor. The gas concentration may be not greater than the preset concentration threshold, or may be greater than the preset concentration threshold.

In this step, the battery control unit may determine a plurality of first near gas sensors for each target gas sensor among the plurality of candidate gas sensors based on the position information of the target gas sensor, where the first near gas sensors are at a distance from the target gas sensor, and the distance is less than a preset distance threshold. Understandably, the first near gas sensors mentioned in this embodiment of this application mean gas sensors adjacent to the target gas sensor among the plurality of candidate gas sensors.

For example, FIG. 6 is a second schematic diagram of a position of a gas sensor according to an embodiment of this application. As shown in FIG. 6, it is assumed that the battery box is 2.4 m long and 1.6 m wide, and contains 6 modules. Each module includes at least one battery cell. The sensing radius of the gas sensor A to gas sensor F is 0.6 m. In other words, the gas sensor A to gas sensor F can cover the entire battery box region. If the gas sensor A is a target gas sensor, then the plurality of first near gas sensors that are at a distance less than the preset distance threshold from the gas sensor A among the plurality of candidate gas sensors may include: a gas sensor B, a gas sensor D, and a gas sensor E.

Step S502: Determining the leaking region based on a first gas concentration measured by each first near gas sensor.

In this step, the battery control unit may determine the leaking region based on the first gas concentration measured by each first near gas sensor, a first sensed region corresponding to the target gas sensor, and a second sensed region corresponding to each first near gas sensor. Understandably, the leaking region in this embodiment of this application is a region inside the battery box.

In a possible implementation, in a case that none of the first gas concentrations measured by all the first near gas sensors is greater than the preset concentration threshold, the battery control unit uses a region in the first sensed region corresponding to the target gas sensor except all the second sensed regions as the leaking region.

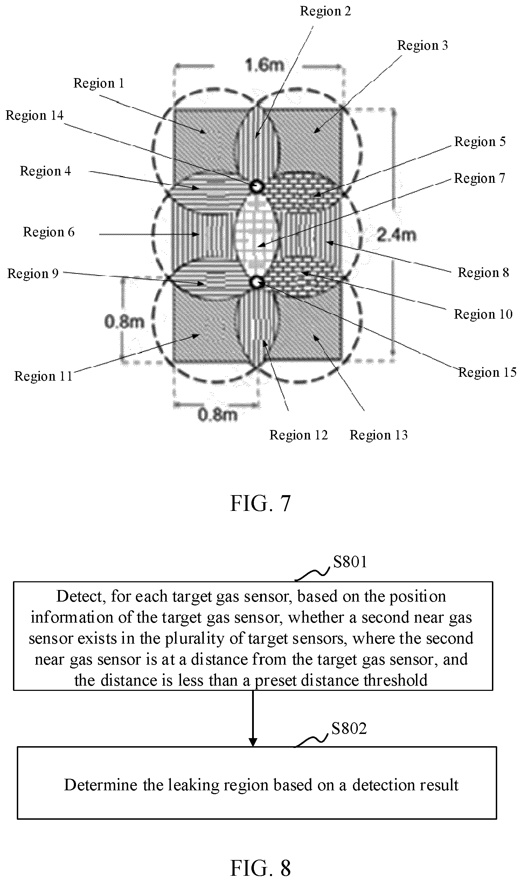

For example, FIG. 7 is a second schematic diagram of locating a leaking region by use of a gas sensor according to an embodiment of this application. Referring to FIG. 6 and FIG. 7, if the gas sensor A is a target gas sensor, the plurality of first near gas sensors of the gas sensor A may include: a gas sensor B, a gas sensor D, a gas sensor E. If none of the first gas concentrations measured by the gas sensor B, the gas sensor D, the gas sensor E is greater than the preset concentration threshold, then the battery control unit uses a region 1 in the first sensed region corresponding to the gas sensor A in the battery box except the second sensed regions as the leaking region, where the second sensed regions correspond to the gas sensor B, the gas sensor D, and the gas sensor E, respectively.

In another possible implementation, if the first gas concentrations detected by a part of the first near gas sensors are greater than the preset concentration threshold and the first gas concentrations detected by another part of the first near gas sensors are not greater than the preset concentration threshold, then the battery control unit may determine a first intersection region of the first sensed region corresponding to the target gas sensor and the second sensed regions corresponding to the part of the first near gas sensors, and use a region in the first intersection region except the second sensed regions corresponding to the other part of the first near gas sensors as the leaking region.

For example, FIG. 7 is a second schematic diagram of locating a leaking region by use of a gas sensor according to an embodiment of this application. Referring to FIG. 6 and FIG. 7, if the gas sensor A is a target gas sensor, the plurality of first near gas sensors of the gas sensor A may include: a gas sensor B, a gas sensor D, a gas sensor E. If the first gas concentration measured by the gas sensor B is greater than the preset concentration threshold but neither the first gas concentration measured by the gas sensor D nor the first gas concentration measured by the gas sensor E is greater than the preset concentration threshold, then the battery control unit may determine a first intersection region of the first sensed region corresponding to the gas sensor A and the second sensed region corresponding to the gas sensor B in the battery box, and use a region 4 in the first intersection region except the second sensed regions as the leaking region, where the second sensed regions correspond to the gas sensor D and the gas sensor E, respectively.

In another possible implementation, if all the first gas concentrations are greater than the preset concentration threshold, then the battery control unit uses a second intersection region as the leaking region, where the second intersection region is an intersection of the first sensed region corresponding to the target gas sensor and the second sensed regions corresponding to the first near gas sensors respectively.

For example, FIG. 7 is a second schematic diagram of locating a leaking region by use of a gas sensor according to an embodiment of this application. Referring to FIG. 6 and FIG. 7, if the gas sensor A is a target gas sensor, the plurality of first near gas sensors of the gas sensor A may include: a gas sensor B, a gas sensor D, a gas sensor E. If all of the first gas concentrations measured by the gas sensor B, the gas sensor D, the gas sensor E are greater than the preset concentration threshold, then the battery control unit may use a second intersection region 14 in the battery box as the leaking region, where the second intersection region is an intersection of the first sensed region corresponding to the gas sensor A and the second sensed regions corresponding to the gas sensor B, the gas sensor D, and the gas sensor E, respectively.

Table 1 is a schematic table of locating a leaking region by a gas sensor array according to an embodiment of this application.

**Table 1**

| Is the gas concentration measured by target gas sensor 1 greater than preset concentration threshold? | Is the gas concentration measured by target gas sensor 2 greater than preset concentration threshold? | Is the gas concentration measured by target gas sensor 3 greater than preset concentration threshold? | Is the gas concentration measured by target gas sensor 4 greater than preset concentration threshold? | Leaking region |
|---|---|---|---|---|
| Sensor A: Yes | Sensor B: No | Sensor D: No | Sensor E: No | Region 1 |
| Sensor A: Yes | Sensor B: No | Sensor D: Yes | Sensor E: No | Region 2 |
| Sensor A: No | Sensor B: No | Sensor D: Yes | Sensor E: No | Region 3 |
| Sensor A: Yes | Sensor B: Yes | Sensor D: No | Sensor E: No | Region 4 |
| Sensor A: No | Sensor B: No | Sensor D: Yes | Sensor E: Yes | Region 5 |
| Sensor A: No | Sensor B: Yes | Sensor C: No | Sensor E: No | Region 6 |
| Sensor B: Yes | Sensor E: Yes | Other sensors: No | | Region 7 |
| Sensor B: No | Sensor E: Yes | Sensor D: No | Sensor F: No | Region 8 |
| Sensor B: Yes | Sensor C: Yes | Sensor E: No | Sensor F: No | Region 9 |
| Sensor B: No | Sensor C: No | Sensor E: Yes | Sensor F: Yes | Region 10 |
| Sensor B: No | Sensor C: Yes | Sensor E: No | Sensor F: No | Region 11 |
| Sensor B: No | Sensor C: Yes | Sensor E: No | Sensor F: Yes | Region 12 |
| Sensor B: No | Sensor C: No | Sensor E: No | Sensor F: Yes | Region 13 |
| Yes for at least three of sensor A, sensor B, sensor D, or sensor E | | | | Region 14 |
| Yes for at least three of sensor B, sensor C, sensor E, or sensor F | | | | Region 15 |

As shown in Table 1, the leaking region located by use of the gas sensor array varies depending on whether the gas concentration measured by each target gas sensor is greater than the preset concentration threshold. Evidently, if more candidate gas sensors are disposed in the same battery box, the region in the battery box can be divided into more sub-regions, and the leaking region can be located more accurately, thereby making it more convenient to take a corresponding precise countermeasure for the leaking region.

In this embodiment, the battery control unit may determine a plurality of first near gas sensors for each target gas sensor among the plurality of candidate gas sensors based on the position information of the target gas sensor, where the first near gas sensors are at a distance from the target gas sensor, and the distance is less than a preset distance threshold. Further, the battery control unit determines the leaking region based on the first gas concentration measured by each first near gas sensor. Evidently, in this embodiment of this application, the leaking region is determined with reference to the first gas concentrations measured by all the first near gas sensors separately, thereby reducing the probability of misjudgment, and improving accuracy of detecting the leaking region.

In some embodiments, FIG. 8 is a schematic flowchart of a liquid leak detection method according to some other embodiments of this application. On the basis of the preceding embodiment, the related content of step S203 "determining a leaking region in the battery box based on the gas concentration detection signal and the position information" in an embodiment of this application is described below. As shown in FIG. 8, the method according to an embodiment of this application includes the following steps:
Step S801: Detecting, for each target gas sensor, based on the position information of the target gas sensor, whether a second near gas sensor exists in the plurality of target sensors, where the second near gas sensor is at a distance from the target gas sensor, and the distance is less than a preset distance threshold.

When the measured gas concentration is greater than a preset concentration threshold, the candidate gas sensor in this embodiment of this application may let the measured gas concentration be carried in a gas concentration detection signal and send the signal to the battery control unit. The gas concentration detection signal is used for indicating the gas concentration measured by the candidate gas sensor. Understandably, when the gas concentration measured by the candidate gas sensor is not greater than the preset concentration threshold, the sensor will not send the gas concentration detection signal to the battery control unit.

In this step, for each target gas sensor, based on the position information of the target gas sensor, the battery control unit may detect whether a second near gas sensor exists in the plurality of target sensors, where the second near gas sensor is at a distance from the target gas sensor, and the distance is less than a preset distance threshold. Understandably, the second near gas sensor mentioned in this embodiment of this application means a gas sensor adjacent to the target gas sensor among the plurality of target gas sensors.

For example, as shown in FIG. 6, if the gas concentrations measured by the gas sensor A, the gas sensor B, and the gas sensor F respectively are greater than the preset concentration threshold and none of the gas concentrations measured by other gas sensors is greater than the preset concentration threshold, then the plurality of target gas sensors include the gas sensor A, the gas sensor B, and the gas sensor F. For the target gas sensor A, the second near gas sensors that are at a distance less than the preset distance threshold from the target gas sensor A among the plurality of target gas sensors may include: the gas sensor B.

For another example, as shown in FIG. 6, if the gas concentrations measured by the gas sensor A, the gas sensor C, and the gas sensor F respectively are greater than the preset concentration threshold and none of the gas concentrations measured by other gas sensors is greater than the preset concentration threshold, then the plurality of target gas sensors include the gas sensor A, the gas sensor C, and the gas sensor F. The distance between the gas sensor C and the gas sensor A is not less than the preset distance threshold, and the distance between the gas sensor F and the gas sensor A is not less than the preset distance threshold. For the target gas sensor A, no second near gas sensor exists among the plurality of target gas sensors, where the second near gas sensor is at a distance less than the preset distance threshold from the target gas sensor A.

Step S802: Determining the leaking region based on a detection result.

In this step, the battery control unit may determine the leaking region based on the detection result of step S802.

In a possible implementation, if a second near gas sensor at a distance less than the preset distance threshold from the target gas sensor exists among the plurality of target sensors, then the battery control unit may determine that a third intersection region is the leaking region, where the third intersection region is an intersection of the first sensed region corresponding to the target gas sensor and a third sensed region corresponding to the second near gas sensor.

For example, as shown in FIG. 6, if the gas concentrations measured by the gas sensor A, the gas sensor B, and the gas sensor F respectively are greater than the preset concentration threshold and none of the gas concentrations measured by other gas sensors is greater than the preset concentration threshold, then the plurality of target gas sensors include the gas sensor A, the gas sensor B, and the gas sensor F. For the gas sensor A, the second near gas sensors that are at a distance less than the preset distance threshold from the target gas sensor A among the plurality of target gas sensors may include: the gas sensor B, and therefore, the battery control unit uses a third intersection region 4 as the leaking region, where the third intersection region is an intersection of the first sensed region corresponding to the gas sensor A and a third sensed region corresponding to the gas sensor B.

In another possible implementation, if the second near gas sensor at a distance less than the preset distance threshold from the target gas sensor does not exist among the plurality of target sensors, the battery control unit may use a region in the first sensed region corresponding to the target gas sensor except the sensed regions corresponding to all the first near gas sensors of the target gas sensor as the leaking region, where the first near gas sensors may be gas sensors at a distance from the target gas sensor among the plurality of candidate gas sensors, and the distance is less than the preset distance threshold.

For example, as shown in FIG. 6, if the gas concentrations measured by the gas sensor A, the gas sensor C, and the gas sensor F respectively are greater than the preset concentration threshold and none of the gas concentrations measured by other gas sensors is greater than the preset concentration threshold, then the plurality of target gas sensors include the gas sensor A, the gas sensor C, and the gas sensor F. The distance between the gas sensor C and the gas sensor A is not less than the preset distance threshold, and the distance between the gas sensor F and the gas sensor A is not less than the preset distance threshold. For the gas sensor A, the second near gas sensor at a distance less than the preset distance threshold from the target gas sensor A does not exist among the plurality of target gas sensors. The plurality of first near gas sensors of the gas sensor A may include: the gas sensor B, the gas sensor D, and the gas sensor E, and therefore, the battery control unit may use a region 1 in the first sensed region corresponding to the gas sensor A except the sensed regions corresponding to the gas sensor B, the gas sensor D, and the gas sensor E respectively as the leaking region.

In this embodiment of this application, for each target gas sensor, based on the position information of the target gas sensor, the battery control unit may detect whether a second near gas sensor exists in the plurality of target sensors, where the second near gas sensor is at a distance from the target gas sensor, and the distance is less than a preset distance threshold. Further, the battery control unit determines the leaking region based on a detection result. Evidently, in this embodiment of this application, the detecting whether a second near gas sensor exists in the plurality of target sensors can reduce the probability of misjudgment and improve accuracy of detecting the leaking region.

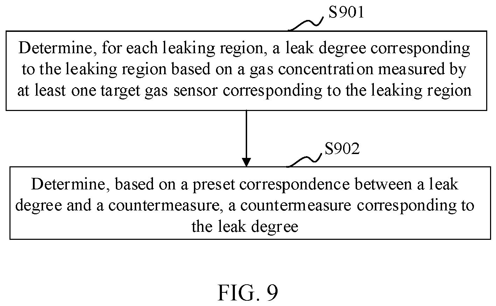

In some embodiments, FIG. 9 is a schematic flowchart of a liquid leak detection method according to some other embodiments of this application. On the basis of the preceding embodiment, the related content of "determining a leak degree corresponding to the leaking region and a countermeasure corresponding to each different leak degree" in an embodiment of this application is described below. As shown in FIG. 9, the method according to an embodiment of this application includes the following steps:
Step S901: Determining, for each leaking region, a leak degree corresponding to the leaking region based on a gas concentration measured by at least one target gas sensor corresponding to the leaking region.

In this step, for each leaking region, the battery control unit may determine a leak degree corresponding to the leaking region based on a gas concentration measured by at least one target gas sensor corresponding to the leaking region, where the target gas sensor corresponding to the leaking region mentioned in this embodiment of this application means that the sensed region of the target gas sensor includes a part or all of the leaking region.

In an embodiment, for each leaking region, the battery control unit may determine a reference gas concentration of the leaking region based on the gas concentration measured by at least one target gas sensor corresponding to the leaking region.

In a possible implementation, if at least one target gas sensor corresponding to the leaking region includes one target gas sensor, then the battery control unit may use the gas concentration measured by this target gas sensor as the reference gas concentration of the leaking region.

In another possible implementation, if at least one target gas sensor corresponding to the leaking region includes a plurality of target gas sensors, then the battery control unit may determine that a maximum value of gas concentrations measured by the plurality of target gas sensors corresponding to the leaking region is the reference gas concentration of the leaking region, or that an average value of gas concentrations measured by the plurality of target gas sensors corresponding to the leaking region is the reference gas concentration of the leaking region.

Definitely, the battery control unit may determine the reference gas concentration of the leaking region by other means based on the gas concentration measured by at least one target gas sensor corresponding to the leaking region. The determining manner is not limited herein.

Further, the battery control unit may determine the leak degree in the leaking region based on the value of the reference gas concentration in the leaking region.

As an example, if the reference gas concentration of the leaking region falls within a first concentration range, then the battery control unit may determine that the leak degree in the leaking region is a first leak level; or, if the reference gas concentration of the leaking region falls within a second concentration range, then the battery control unit may determine that the leak degree in the leaking region is a second leak level; or, if the reference gas concentration in the leaking region falls within a third concentration range, then the battery control unit may determine that the leak degree in the leaking region is a third leak level. The third leak level is greater than the second leak level, and the second leak level is greater than the first leak level. A lower limit of the second concentration range may be equal to an upper limit of the first concentration range, and a lower limit of the third concentration range may be equal to an upper limit of the second concentration range.

For example, the lower limit of the first concentration range may be the preset concentration threshold, the upper limit of the first concentration range may be a preset concentration threshold', the lower limit of the second concentration range may be the preset concentration threshold', the upper limit of the second concentration range may be a preset concentration threshold", and the lower limit of the third concentration range may be the preset concentration threshold". It is hereby noted that, if the gas concentration is equal to the preset concentration threshold', the battery control unit may determine that the gas concentration falls within the first concentration range or the second concentration range; and, if the gas concentration is equal to the preset concentration threshold", the battery control unit may determine that the gas concentration falls within the second concentration range or the third concentration range.

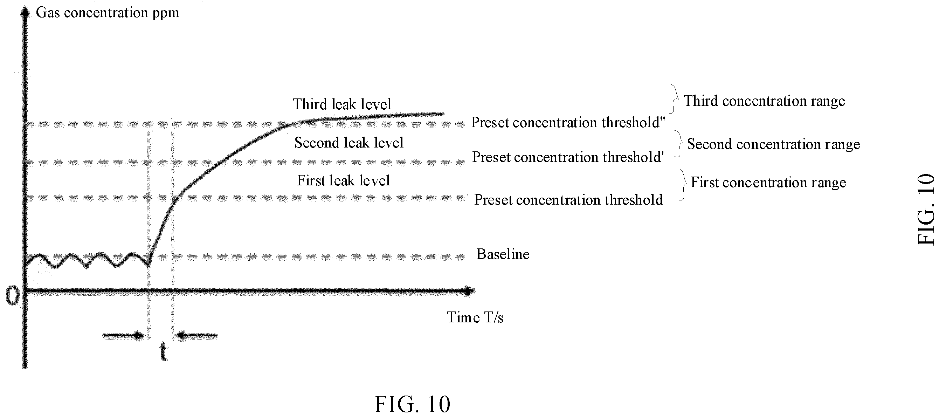

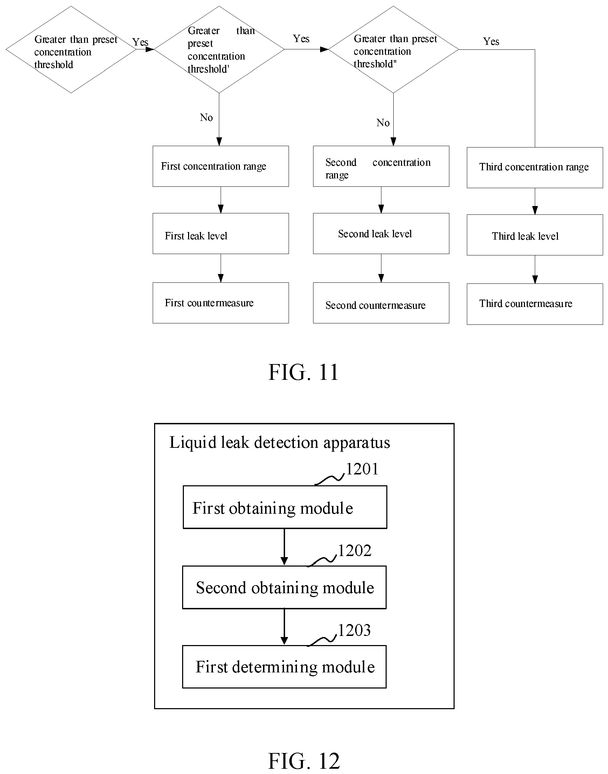

FIG. 10 is a schematic diagram of how a concentration range covering a reference gas concentration is related to a leak degree according to an embodiment of this application; and FIG. 11 is a schematic diagram of determining a countermeasure based on a leak degree according to an embodiment of this application. As shown in FIG. 10 and FIG. 11, if the reference gas concentration exceeds a baseline gas concentration, or, if a signal slope value is greater than a preset slope value within a time t in which the reference gas concentration exceeds the baseline gas concentration, then the battery control unit may determine that some gas sensors in the battery box have responded with a significant signal. If the reference gas concentration of the leaking region is greater than the preset concentration threshold and less than or equal to the preset concentration threshold', that is, falls within the first concentration range, then the battery control unit may determine that the leak degree in the leaking region is the first leak level; or, if the reference gas concentration of the leaking region is greater than the preset concentration threshold' and less than or equal to the preset concentration threshold", that is, falls within the second concentration range, then the battery control unit may determine that the leak degree in the leaking region is the second leak level; or, if the reference gas concentration of the leaking region is greater than the preset concentration threshold", that is, falls within the third concentration range, then the battery control unit may determine that the leak degree in the leaking region is the third leak level.

Step S902: Determining, based on a preset correspondence between a leak degree and a countermeasure, a countermeasure corresponding to the leak degree.

The preset correspondence between the leak degree and the countermeasure in this embodiment of this application may be used for indicating a countermeasure corresponding to each different leak degree. As an example, the countermeasure in this embodiment of this application may include, but is not limited to, at least one of: outputting prompt information to a vehicle containing the battery box, where the prompt information is used for prompting a user of the vehicle that a liquid leak occurs in the battery box; controlling a battery cell located in the leaking region to stop operating; reducing an operating power of the battery cell located in the leaking region; controlling a water cooling apparatus located in the leaking region to stop operating; reducing an operating power of the water cooling apparatus located in the leaking region; or outputting alarm information to a target terminal, where the alarm information is used for indicating information about the vehicle and information about the battery box.

As an example, the preset correspondence between the leak degree and the countermeasure may include: a correspondence between the first leak level and a corresponding first countermeasure, a correspondence between the second leak level and a corresponding second countermeasure, and a correspondence between the third leak level and a corresponding third countermeasure.

In this step, the battery control unit may determine, based on the preset correspondence between the leak degree and the countermeasure, a countermeasure corresponding to the leak degree corresponding to the leaking region in step S901, thereby maximally avoiding the safety problems caused by the liquid leakage.

For example, as shown in FIG. 11, if the leak degree corresponding to the leaking region in step S901 is a first leak level, the battery control unit may determine, based on the preset correspondence between the leak degree and the countermeasure, that the countermeasure corresponding to the leak degree is the first countermeasure. The first countermeasure may include: outputting prompt information to the vehicle containing the battery box. The prompt information is used for prompting the user of the vehicle that a liquid leak occurs in the battery box. The prompt information may further include information about the leaking region, so that the user can quickly determine the leaking region.

For another example, as shown in Figure 11, if the leak degree corresponding to the leaking region in step S901 is a second leak level, then the battery control unit may determine, based on the preset correspondence between the leak degree and the countermeasures, that the countermeasure corresponding to the leak degree is the second countermeasure. The second countermeasure may include at least one of: outputting prompt information to a vehicle containing the battery box, where the prompt information is used for prompting a user of the vehicle that a liquid leak occurs in the battery box; controlling a battery cell located in the leaking region to stop operating; reducing an operating power of the battery cell located in the leaking region; controlling a water cooling apparatus located in the leaking region to stop operating; or reducing an operating power of the water cooling apparatus located in the leaking region.

For another example, as shown in FIG. 11, if the leak degree corresponding to the leaking region in step S901 is a third leak level, then the battery control unit may determine, based on the preset correspondence between the leak degree and the countermeasure, that the countermeasure corresponding to the leak degree is the third countermeasure. The third countermeasure may include at least one of: outputting prompt information to the vehicle containing the battery box, where the prompt information is used for prompting the user of the vehicle that a liquid leak occurs in the battery box, so as to facilitate the user to leave the vehicle; controlling a battery cell located in the leaking region to stop operating; reducing an operating power of the battery cell located in the leaking region; controlling a water cooling apparatus located in the leaking region to stop operating; reducing an operating power of the water cooling apparatus located in the leaking region; or, outputting alarm information to a target terminal, where the alarm information is used for indicating information about the vehicle and information about the battery box. The information about the vehicle may include, but is not limited to, vehicle position information and vehicle model information. The information about the battery box may include, but is not limited to, a model of the battery box and type of the battery box, so that firefighters can quickly locate the vehicle and provide corresponding firefighting measures.

In this embodiment of this application, for each leaking region, the battery control unit may determine a leak degree corresponding to the leaking region based on the gas concentration measured by at least one target gas sensor corresponding to the leaking region, and determine, based on the preset correspondence between the leak degree and the countermeasure, a countermeasure corresponding to the leak degree, thereby maximally avoiding safety problems caused by the liquid leakage and improving safety of the battery box and the vehicle.

Understandably, although the steps in a flowchart related to each of the above embodiments are sequentially displayed as indicated by arrows, the steps are not necessarily performed in the order indicated by the arrows. Unless otherwise expressly specified herein, the order of performing the steps is not strictly limited, and the steps may be performed in other order. Moreover, at least a part of the steps in the flowchart related to each embodiment described above may include a plurality of substeps or stages. The substeps or stages are not necessarily performed at the same time, but may be performed at different times. The substeps or stages are not necessarily performed sequentially, but may take turns with or alternate with other steps or at least a part of substeps or stages of other steps.

Based on the same inventive concept, an embodiment of this application further provides a liquid leak detection apparatus for implementing the liquid leak detection method. The technical solution of this apparatus to solve the problems is similar to the technical solution described in the above method. Therefore, the specific definitions in one or more embodiments of the liquid leak detection apparatus provided below may be learned with reference to the above definitions for the liquid leak detection method, the details of which are omitted here.

In some embodiments, FIG. 12 is a schematic structural diagram of a liquid leak detection apparatus according to some embodiments of this application. The liquid leak detection apparatus according to an embodiment of this application is applicable in a battery control unit. As shown in FIG. 12, the liquid leak detection apparatus according to an embodiment of this application may include: a first obtaining module 1201, a second obtaining module 1202, and a first determining module 1203.

The obtaining module 1201 is configured to obtain a gas concentration detection signal output separately by a plurality of target gas sensors in a battery box, where the gas concentration detection signal is used for indicating a measured gas concentration.

The second obtaining module 1202 is configured to obtain position information of each target gas sensor in the battery box.

The first determining module 1203 is configured to determine a leaking region in the battery box based on the gas concentration detection signal and the position information.

In some embodiments, the target gas sensor is a sensor that, among a plurality of candidate gas sensors disposed in the battery box, detects a gas concentration greater than a preset concentration threshold. The first determining module 1203 includes:
a first determining unit, configured to determine a plurality of first near gas sensors for each target gas sensor among the plurality of candidate gas sensors based on the position information of the target gas sensor, where the first near gas sensors are at a distance from the target gas sensor, and the distance is less than a preset distance threshold; and
a second determining unit, configured to determine the leaking region based on a first gas concentration measured by each first near gas sensor.

In some embodiments, the second determining unit is specifically configured to: determine the leaking region based on each first gas concentration, a first sensed region corresponding to the target gas sensor, and a second sensed region corresponding to each first near gas sensor.

In some embodiments, the second determining unit is specifically configured to:
use, in a case that none of the first gas concentrations is greater than the preset concentration threshold, a region in the first sensed region except all the second sensed regions as the leaking region;
determine, in a case that the first gas concentrations detected by a part of the first near gas sensors are greater than the preset concentration threshold and the first gas concentrations detected by another part of the first near gas sensors are not greater than the preset concentration threshold, a first intersection region of the first sensed region and the second sensed regions corresponding to the part of the first near gas sensors, and use a region in the first intersection region except the second sensed regions corresponding to the other part of the first near gas sensors as the leaking region; and
use, in a case that all the first gas concentrations are greater than the preset concentration threshold, a second intersection region of the first sensed region and all the second sensed regions as the leaking region.

In some embodiments, the target gas sensor is a sensor that, among a plurality of candidate gas sensors disposed in the battery box, detects a gas concentration greater than a preset concentration threshold. The first determining module 1203 includes:
a detection unit, configured to detect, for each target gas sensor, based on the position information of the target gas sensor, whether a second near gas sensor exists in the plurality of target sensors, where the second near gas sensor is at a distance from the target gas sensor, and the distance is less than a preset distance threshold; and
a third determining unit, configured to determine the leaking region based on a detection result.

In some embodiments, the third determining unit is specifically configured to:
use, in a case that the second near gas sensor exists, a third intersection region of the first sensed region corresponding to the target gas sensor and a third sensed region corresponding to the second near gas sensor as the leaking region; and
use, in a case that the second near gas sensor does not exist, a region in the first sensed region except sensed regions corresponding to all the first near gas sensors of the target gas sensor as the leaking region, where the first near gas sensors are gas sensors at a distance from the target gas sensor among the plurality of candidate gas sensors, and the distance is less than the preset distance threshold.

In some embodiments, the apparatus further includes: a second determining module, configured to determine, for each leaking region, a leak degree corresponding to the leaking region based on a gas concentration measured by at least one target gas sensor corresponding to the leaking region, where a sensed region of the target gas sensor includes a part or all of the leaking region.

In some embodiments, the second determining module includes:
a fourth determining unit, configured to determine a reference gas concentration based on the gas concentration measured by the at least one target gas sensor; and
a fifth determining unit, configured to determine the leak degree based on a value of the reference gas concentration.

In some embodiments, the fourth determining unit is specifically configured to: determine, when a number of the target sensors is plural, that a maximum value of gas concentrations measured by the plurality of target gas sensors is the reference gas concentration, or that an average value of gas concentrations measured by the plurality of target gas sensors is the reference gas concentration.

In some embodiments, the apparatus further includes: a third determining unit, configured to determine, based on a preset correspondence between a leak degree and a countermeasure, a countermeasure corresponding to the leak degree.

In some embodiments, the countermeasure includes at least one of:
outputting prompt information to a vehicle containing the battery box, where the prompt information is used for prompting a user of the vehicle that a liquid leak occurs in the battery box;
controlling a battery cell located in the leaking region to stop operating;
reducing an operating power of the battery cell located in the leaking region;
controlling a water cooling apparatus located in the leaking region to stop operating;
reducing an operating power of the water cooling apparatus located in the leaking region; or
outputting alarm information to a target terminal, where the alarm information is used for indicating information about the vehicle and information about the battery box.

In some embodiments, the gas concentration detection signal output by each target gas sensor is further used for indicating the position information of the target gas sensor, and the second obtaining module 1202 is specifically configured to: determine, for each target gas sensor, the position information of the target gas sensor in the battery box based on the gas concentration detection signal output by the target gas sensor.

The liquid leak detection apparatus according to this embodiment of this application may be used for implementing the technical solution with respect to the battery control unit in foregoing liquid leak detection method embodiment. The implementation principles and technical effects of the apparatus are similar, the details of which are omitted here.

The modules of the liquid leak detection apparatus may be implemented entirely or partly by software, hardware, or a combination thereof. The modules may be built in, or independent of, a processor of an electronic device in hardware form, or may be stored in a memory of the electronic device in software form, so as to be invoked by the processor to perform the corresponding operations.

In some embodiments, this application further provides a battery control unit, including a memory and a processor. The memory stores a computer program. When executing the computer program, the processor implements the technical solution with respect to the battery control unit in the foregoing liquid leak detection method embodiment of this application. The implementation principles and technical effects of the battery control unit are similar, the details of which are omitted here.

In some embodiments, this application further provides a battery management system. The system includes: the battery control unit described in the preceding embodiment of this application, and a plurality of candidate gas sensors distributed in the battery box.

In some embodiments, this application further provides an electrical device. The electrical device includes the battery management system according to the preceding embodiment of this application.

In some embodiments, this application further provides a computer-readable storage medium, on which a computer program is stored. When executed by a processor, the computer program implements the technical solution with respect to the battery control unit in the foregoing liquid leak detection method embodiment of this application. The implementation principles and technical effects of the computer-readable storage medium are similar, the details of which are omitted here.

In some embodiments, this application further provides a computer program product including a computer program. When executed by a processor, the computer program implements the technical solution with respect to the battery control unit in the foregoing liquid leak detection method embodiment of this application. The implementation principles and technical effects of the computer program product are similar, the details of which are omitted here.

A person of ordinary skill in the art may understand that all or some of the processes of the methods in the foregoing embodiments may be implemented by a computer program instructing relevant hardware. The computer program may be stored in a nonvolatile computer-readable storage medium. When executed, the computer program can perform processes that include the foregoing method embodiments. Any reference to a memory, a database, or another medium used in each embodiment of this application may include at least one of a non-volatile memory or a volatile memory. Non-volatile memories may include read-only memory (Read-Only Memory, ROM), magnetic tape, floppy disk, flash memory, optical memory, high-density embedded non-volatile memory, resistive switching random-access memory (ReRAM), magnetoresistive random-access memory (Magnetoresistive Random Access Memory (MRAM), ferroelectric random-access memory (Ferroelectric Random Access Memory, FRAM), phase change memory (Phase Change Memory, PCM), graphene memory, or the like. Volatile memories may include a random-access memory (Random Access Memory, RAM), an external cache, or the like. Illustratively rather than restrictively, the RAM is in diverse forms, such as a static random access memory (Static Random Access Memory, SRAM) or a dynamic random access memory (Dynamic Random Access Memory, DRAM). The processor mentioned in each embodiment of this application may be, but is not limited to, a general-purpose processor, central processing unit, graphics processing unit, digital signal processor, programmable logic device, quantum computing-based data processing logic device, or the like.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A liquid leak detection method, wherein the method comprises:
obtaining a gas concentration detection signal output separately by a plurality of target gas sensors in a battery box, wherein the gas concentration detection signal is used for indicating a measured gas concentration;
obtaining position information of each target gas sensor in the battery box; and
determining a leaking region in the battery box based on the gas concentration detection signal and the position information.

2. The method according to claim 1, wherein the target gas sensor is a sensor that, among a plurality of candidate gas sensors disposed in the battery box, detects a gas concentration greater than a preset concentration threshold, and the determining a leaking region in the battery box based on the gas concentration detection signal and the position information comprises:
determining a plurality of first near gas sensors for each target gas sensor among the plurality of candidate gas sensors based on the position information of the target gas sensor, wherein the first near gas sensors are at a distance from the target gas sensor, and the distance is less than a preset distance threshold; and
determining the leaking region based on a first gas concentration measured by each first near gas sensor.

3. The method according to claim 2, wherein the determining the leaking region based on a first gas concentration measured by each first near gas sensor comprises:
determining the leaking region based on each first gas concentration, a first sensed region corresponding to the target gas sensor, and a second sensed region corresponding to each first near gas sensor.

4. The method according to claim 3, wherein the determining the leaking region based on each first gas concentration, a first sensed region corresponding to the target gas sensor, and a second sensed region corresponding to each first near gas sensor comprises:
using, in a case that none of the first gas concentrations is greater than the preset concentration threshold, a region in the first sensed region except all the second sensed regions as the leaking region;
determining, in a case that the first gas concentrations detected by a part of the first near gas sensors are greater than the preset concentration threshold and the first gas concentrations detected by another part of the first near gas sensors are not greater than the preset concentration threshold, a first intersection region of the first sensed region and the second sensed regions corresponding to the part of the first near gas sensors, and using a region in the first intersection region except the second sensed regions corresponding to the other part of the first near gas sensors as the leaking region; and
using, in a case that all the first gas concentrations are greater than the preset concentration threshold, a second intersection region of the first sensed region and all the second sensed regions as the leaking region.

5. The method according to claim 1, wherein the target gas sensor is a sensor that, among a plurality of candidate gas sensors disposed in the battery box, detects a gas concentration greater than a preset concentration threshold, and the determining a leaking region in the battery box based on the gas concentration detection signal and the position information comprises:
detecting, for each target gas sensor, based on the position information of the target gas sensor, whether a second near gas sensor exists in the plurality of target sensors, wherein the second near gas sensor is at a distance from the target gas sensor, and the distance is less than a preset distance threshold; and
determining the leaking region based on a detection result.

6. The method according to claim 5, wherein the determining the leaking region based on a detection result comprises:
using, in a case that the second near gas sensor exists, a third intersection region of the first sensed region corresponding to the target gas sensor and a third sensed region corresponding to the second near gas sensor as the leaking region; and
using, in a case that the second near gas sensor does not exist, a region in the first sensed region except sensed regions corresponding to all the first near gas sensors of the target gas sensor as the leaking region, wherein the first near gas sensors are gas sensors at a distance from the target gas sensor among the plurality of candidate gas sensors, and the distance is less than the preset distance threshold.

7. The method according to any one of claims 1 to 6, wherein the method further comprises:
determining, for each leaking region, a leak degree corresponding to the leaking region based on a gas concentration measured by at least one target gas sensor corresponding to the leaking region, wherein a sensed region of the target gas sensor comprises a part or all of the leaking region.

8. The method according to claim 7, wherein the determining a leak degree corresponding to the leaking region based on a gas concentration measured by at least one target gas sensor corresponding to the leaking region comprises:
determining a reference gas concentration based on the gas concentration measured by the at least one target gas sensor; and
determining the leak degree based on a value of the reference gas concentration.

9. The method according to claim 8, wherein the determining a reference gas concentration based on the gas concentration measured by the at least one target gas sensor comprises:
determining, when a number of the target sensors is plural, that a maximum value of gas concentrations measured by the plurality of target gas sensors is the reference gas concentration, or that an average value of gas concentrations measured by the plurality of target gas sensors is the reference gas concentration.

10. The method according to claim 8 or 9, wherein the method further comprises:
determining, based on a preset correspondence between a leak degree and a countermeasure, a countermeasure corresponding to the leak degree.

11. The method according to claim 10, wherein the countermeasure comprises at least one of:
outputting prompt information to a vehicle containing the battery box, wherein the prompt information is used for prompting a user of the vehicle that a liquid leak occurs in the battery box;
controlling a battery cell located in the leaking region to stop operating;
reducing an operating power of the battery cell located in the leaking region;
controlling a water cooling apparatus located in the leaking region to stop operating;
reducing an operating power of the water cooling apparatus located in the leaking region; or
outputting alarm information to a target terminal, wherein the alarm information is used for indicating information about the vehicle and information about the battery box.

12. The method according to any one of claims 1 to 6, wherein the gas concentration detection signal output by each target gas sensor is further used for indicating the position information of the target gas sensor, and the obtaining position information of each target gas sensor in the battery box comprises:
determining, for each target gas sensor, the position information of the target gas sensor in the battery box based on the gas concentration detection signal output by the target gas sensor.

13. A liquid leak detection apparatus, wherein the apparatus comprises:
a first obtaining module, configured to obtain a gas concentration detection signal output separately by a plurality of target gas sensors in a battery box, wherein the gas concentration detection signal is used for indicating a measured gas concentration;
a second obtaining module, configured to obtain position information of each target gas sensor in the battery box; and
a determining module, configured to determine a leaking region in the battery box based on the gas concentration detection signal and the position information.

14. A battery control unit, comprising a memory and a processor, wherein the memory stores a computer program, and, when executing the computer program, the processor implements steps of the method according to any one of claims 1 to 12.

15. A battery management system, wherein the system comprises: the battery control unit according to claim 14, and a plurality of candidate gas sensors distributed in the battery box.

16. An electrical device, wherein the electrical device comprises the battery management system according to claim 15.

17. A computer-readable storage medium on which a computer program is stored, wherein the computer program implements steps of the method according to any of claims 1 to 12 when executed by a processor.

18. A computer program product, comprising a computer program, wherein the computer program implements steps of the method according to any one of claims 1 to 12 when executed by a processor.
